# EUROPEAN PATENT SPECIFICATION

(11) **EP 2 055 960 B1**
(45) Date of publication and mention of the grant of the patent: **30.04.2014**
(21) Application number: 08018884.0
(22) Date of filing: 29.10.2008
(51) Int. Cl.: F04D 19/04, F04D 25/06, H02K 17/16, H02K 7/09

(54) **Rotary apparatus**
Drehvorrichtung
Appareil rotatif

(30) Priority: 29.10.2007 JP 2007280989
(43) Date of publication of application: 06.05.2009
(73) Proprietor: EBARA CORPORATION, Ohta-ku, Tokyo (JP)
(72) Inventor: Kawasaki, Hiroyuki, Tokyo (JP); Miyamoto, Matsutaro, Tokyo (JP)
(74) Representative: Carstens, Dirk Wilhelm

(56) References cited:
- JP-A- 11 027 911
- JP-U- H0 253 264
- JP-U- 56 123 781

## Description

### BACKGROUND OF THE INVENTION

### Field of the Invention:

The present invention relates to a rotary apparatus in which a rotor shaft, to which a rotor of an induction motor is fixed, rotates at a relatively high speed by the torque of the induction motor.

### Description of the Related Art:

A turbomolecular pump is an example of a rotary apparatus in which a rotor shaft rotates at a relatively high speed. FIG. 1 is a cross-sectional diagram showing a conventional turbomolecular pump (see JP 2002-286036A). The turbomolecular pump includes a rotor shaft 11 to which are integrally fixed a motor rotor 13 of an induction motor 12, targets 15, 15 of a radial magnetic bearing 14, sensing object portions 17, 17 of a radial displacement sensor 16, a target 19 of an axial magnetic bearing 18, and a sensing object portion (not shown) of an axial displacement sensor.

A rotor (impeller) 64 having rotary blades 60 and a threaded groove portion 62 is secured to an upper end of the rotor shaft 11. Fixed blades 68, arranged alternately with the rotary blades 60, are provided on an inner surface of a pump casing 66. A blade exhaust portion L₁, which exhausts a gas by the interaction of the rotary blades 60 rotating at a high speed and the stationary fixed blades 68, is thus constructed. A threaded groove spacer 70 is disposed such that it surrounds the threaded groove portion 62. A threaded groove exhaust portion L₂, which exhausts a gas by the drag effect of the threaded groove 62a of the threaded groove portion 62 rotating at a high speed, is thus constructed. With the threaded groove exhaust portion L₂ provided downstream of the blade exhaust portion L₁, the turbomolecular pump can deal with a wide range of flow rate.

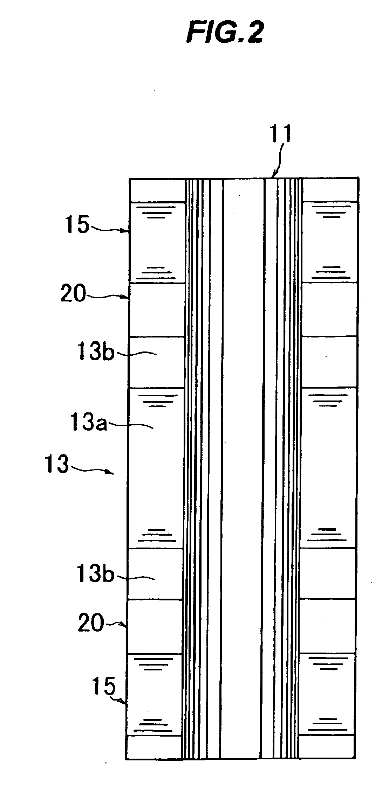

In the conventional turbomolecular pump, the motor rotor 13 and rotor spacers 20 for axial positioning are in contact with motor end rings 13b, 13b and the targets 15, 15 in the axial direction, as shown in FIG. 2. The motor end ring 13b is used to assemble and connect conductors disposed in a core 13a of the motor rotor 13 of the induction motor 12. A cast pure aluminum material is generally used for the motor end ring 13b. The specific gravity, tensile strength, longitudinal elastic modulus and linear expansion coefficient of cast pure aluminum generally used for motor end rings are as follows:
Specific gravity: 2.7
Tensile strength: 68 MPa
Longitudinal elastic modulus: 68.6 MPa
Linear expansion coefficient: 2.4×10⁻⁵/ °C

It is possible that the strength of a motor end ring can restrict the permissible rotating speed of a rotor when rotating it at a high speed.

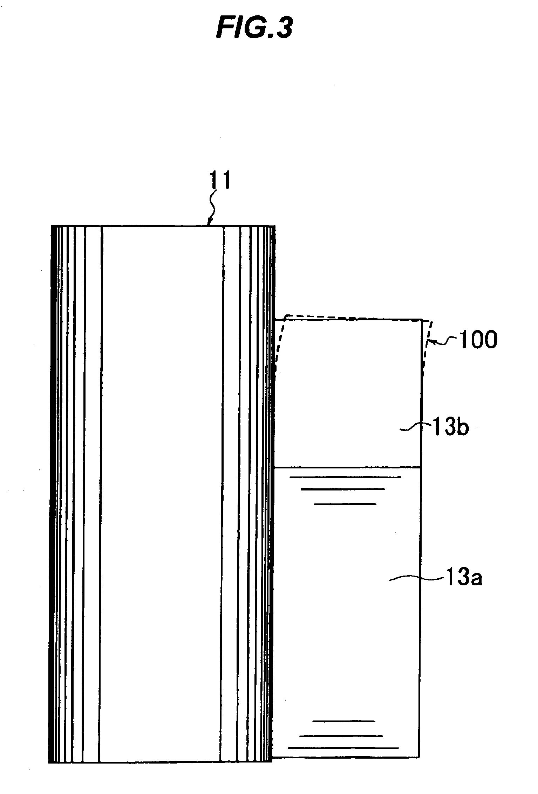

In the conventional turbomolecular pump, the motor end ring 13b is cantilevered, as shown in FIG. 2. Such a motor end ring 13b, when rotated at a high speed, elastically deforms by centrifugal force, etc., as shown by broken lines 100 in FIG. 3. In order to reduce the radial deformation of the motor end ring 13b, the end surface of the motor end ring 13b is in contact with the end surface of the rotor spacer 20. Reducing the deformation at the end portion of the motor ring 13b can also reduce stress which acts on that portion. However, the motor rotor 13 generates heat when carrying out an operation that places a load on the induction motor 12, such as introduction of a gas into the pump. Because the motor end ring 13b, made of aluminum, has a larger expansion coefficient than other members made of other materials, an axial internal stress acts on the motor end ring 13b and the rotor spacer 20 when the motor end ring 13b generates heat. The internal stress (which causes the motor end ring 13b and the motor spacer 20 to compress each other) brings about a change in the natural frequency of the entire rotor, hindering stable rotation of the rotor.

JP 02-53264 U discloses a rotary apparatus and was used as a basis for the preamble of claim 1.

With regard to the prior art, attention is also drawn to JP 56-123781 U.

Further, JP 11-027911 A discloses a rotor of a motor, wherein the rotor is provided with a rotatably installed rotary shaft, a core which is fixed to the rotary shaft and holds a plurality of conductors, end rings for connecting the conductors held by the core at both ends of them, and balancers which are located on the external faces of the end rings, being fixed to the rotary shaft, and correct a rotation balance. Faces of the balancers facing the end rings are abutted directly against the side faces of the end rings or pressed against them. By this method, the balancers can provide the reinforcement of the end rings and effective radiation.

The present invention has been made in view of the above situation in the related art. It is therefore an object of the present invention to provide a rotary apparatus in which a rotor can rotate stably when it rotates at a high speed and which rotates at a relatively high speed by the torque of a highly reliable induction motor.

In order to achieve the object, the present invention provides a rotary apparatus as set forth in claim 1. Preferred embodiments of the present invention may be gathered from the dependent claims.

With the provision, to the rotor shaft, of the member that covers the motor end ring which assembles and connects conductors disposed in the motor rotor core, it becomes possible to prevent radial deformation of the motor end ring upon high-speed rotation, thereby preventing breakage of the motor end ring.

In a preferred aspect of the present invention, the member that covers the motor end ring, in its portion lying outside the outer periphery of the motor end ring, is in axial contact with the motor rotor core.

In another aspect of the present disclosure, the member that covers the motor end ring, in its portion lying inside the inner periphery of the motor end ring, is in axial contact with the motor rotor core.

Because the member that covers the motor end ring, in its portion lying either outside the outer periphery or inside the inner periphery of the motor end ring, is in axial contact with the motor rotor core, axial positioning of the motor rotor core, etc. can be performed irrespective of the motor end ring having a large thermal expansion coefficient. This can suppress the action of an internal stress due to thermal expansion of the motor end ring, thereby preventing a change in the natural frequency of the entire rotor.

In a preferred aspect of the present invention, the end of the motor end ring on the side opposite the motor rotor core is not in contact with the member that surrounds the motor end ring, with an axial gap being formed between them.

This can prevent an increase in internal stress due to thermal expansion of the motor end ring, and thus can prevent a change in the natural frequency of the entire rotor caused thereby.

In a preferred aspect of the present invention, the motor end ring is not in radial contact with an inner peripheral surface of the member that surrounds the motor end ring, with a radial gap being formed between them.

In a preferred aspect of the present invention, the motor end ring has a tapered cross-sectional shape whose radial thickness decreases with distance from the motor rotor core.

The use of such a tapered cross-sectional shape can reduce deformation of the motor end ring caused by its rotation.

According to the present invention, the provision to the rotor shaft of the member that covers the motor end ring makes it possible to prevent displacement of the motor end ring upon its rotation, thereby preventing breakage of the motor end ring. Thus, the present invention can provide a highly reliable rotary apparatus which is excellent in high-speed rotation stability.

### BRIEF DESCRIPTION OF THE DRAWINGS

FIG. 1 is a cross-sectional diagram showing a conventional turbomolecular pump;
FIG. 2 is a cross-sectional diagram showing a shaft assembly of the turbomolecular pump of FIG. 1;
FIG. 3 is an enlarged view of a portion of FIG. 2;
FIG. 4 is a cross-sectional diagram showing an embodiment of a rotor for use in a rotary apparatus according to the present invention;
FIG. 5 is an enlarged view of a portion of FIG. 4;
FIG. 6 is a cross-sectional diagram showing another embodiment of a rotor for use in a rotary apparatus according to the present invention;
FIG. 7 is an enlarged view of a portion of FIG. 6;
FIG. 8 is a cross-sectional diagram showing yet another embodiment of a rotor for use in a rotary apparatus according to the present invention; and
FIG. 9 is a cross-sectional diagram showing yet another embodiment of a rotor for use in a rotary apparatus according to the present invention.

### DETAILED DESCRIPTION OF THE PREFERRED EMBODIMENTS

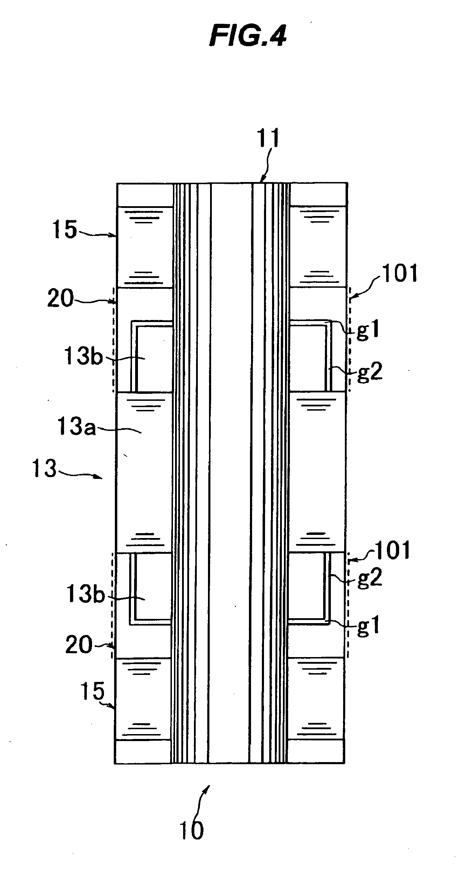

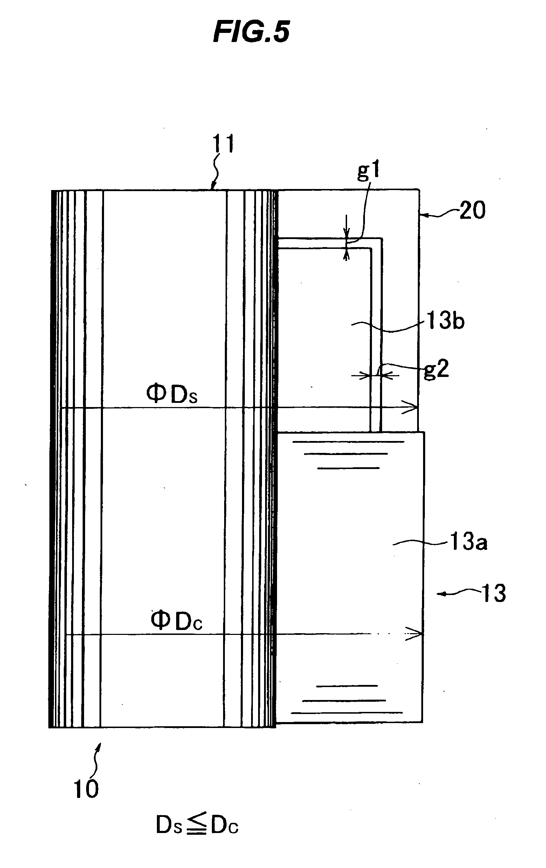

Preferred embodiments of the present invention will now be described with reference to the drawings. FIG. 4 is a cross-sectional diagram showing an embodiment of a rotor for use in a rotary apparatus according to the present invention, and FIG. 5 is an enlarged view of a portion of FIG. 4. The rotor 10 of this embodiment is a shaft assembly of a turbomolecular pump. The rotor 10 includes a rotor shaft 11. A motor rotor 13 of an induction motor, and targets 15, 15 of a radial magnetic bearing, disposed on both sides of the motor rotor 13, are fixed to the rotor shaft 11 and arranged in the axial direction with rotor spacers 20, 20 interposed between the targets 15, 15 and a motor rotor core 13a. The motor rotor 13 has the motor rotor core 13a in which conductors are disposed, and motor end rings 13b, which assemble and connect the conductors, are disposed on both sides of the motor rotor core 13a.

The rotor spacer 20 is a cylindrical shape and has, in its interior, a space having such an inner diameter that it covers an outer periphery of the motor end ring 13b. The motor rotor core 13a, the rotor spacers 20, 20 and the targets 15, 15 of the radial magnetic bearing are axially positioned such that the rotor spacers 20, 20 are interposed between the motor rotor core 13a and the targets 15, 15 disposed on both sides of the motor rotor core 13a. The rotor spacers 20, 20 each cover the radial periphery of the motor end ring 13b. In particular, the rotor spacer 20, at its one end (the end on the side opposite the motor rotor core 13a), is fit to the rotor shaft 11 and, at the other end, in its portion lying outside the outer periphery of the motor end ring 13b, is in axial contact with the end surface of the motor rotor core 13a. A predetermined gap g1 is formed between the end surface of the motor end ring 13b on the side opposite the motor rotor core 13a and the inner end surface of the rotor spacer 20, i.e., the end surface of the motor end ring 13b is not in contact with the rotor spacer 20.

By thus providing the gap g1 between the end surface of the motor end ring 13b and the inner surface of the rotor spacer 20 so that the motor end ring 13b is not in contact with the rotor spacer 20 in the axial direction, it becomes possible to prevent an increase in internal stress due to thermal expansion of the motor end ring 13b, thus preventing a change in the natural frequency of the rotor caused thereby. Further, by constructing the rotor spacer 20 such that it covers the radial periphery of the motor end ring 13b, it becomes possible to prevent radial deformation of the motor end ring 13b due to centrifugal force, etc., thereby preventing breakage of the motor end ring 13b caused by the deformation. The radial gap g2 between the motor end ring 13b and the inner surface of the rotor spacer 20, covering the motor end ring 13b, may be sufficient if it is formed to such an extent as to enable assembling of the rotor 10.

In order to avoid direct contact with the motor end ring 13b, the rotor spacer 20, in its portion lying outside the outer periphery of the motor end ring 13b, is made to be in contact with the motor rotor core 13a when positioning the motor rotor 13 and the targets 15, 15 of the of the radial magnetic bearing in the axial direction, as shown in FIG. 4. Thus, the rotor spacers 20, 20 are in direct contact with the both end surfaces of the motor rotor core 13a in the axial direction. Silicon steel, which is a ferromagnetic material, may be used as a material for the motor rotor core 13a. A stainless steel (SUS) alloy or a titanium alloy is suitably used as a material for the rotor spacer 20. The linear expansion coefficients of a stainless steel alloy and a titanium alloy are smaller than the linear expansion coefficient of aluminum, and are relatively near the linear expansion coefficient of silicon steel. Accordingly, the use of such materials in combination for the motor rotor core 13a and for the rotor spacer 20 will reduce an increase in internal stress upon thermal expansion of the members, and thus reduce a change in the natural frequency of the entire rotor 10.

Table 1 below shows specific examples of materials usable for the rotor spacer 20, i.e., the member that covers the motor end ring 13b, and the properties of the materials (specific gravity, tensile strength [Mpa], longitudinal elastic modulus [Gpa], linear expansion coefficient × 10⁻⁵/ 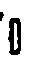 c, and specific strength=tensile strength/specific gravity).

**Table 1**

| | SUS 304 | SUS 403 | SUS 420 | SUS 630 | TAF 6400 |
|---|---|---|---|---|---|
| Specific gravity | 7.93 | 7.75 | 7.75 | 7.75 | 4.42 |
| Tensile strength [Mpa] | 520 | 440 | 540 | 930 | 890 |
| Longitudinal elastic Modulus [GPa] | 193 | 200 | 200 | 196 | 113 |
| linear expansion coefficient × 10⁻⁵/ 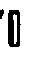 C | 17.2 | 9.9 | 10.3 | 10.8 | 8.8 |
| Specific strength | 65.6 | 56.8 | 70 | 120 | 201 |

| | | | | | |
|---|---|---|---|---|---|
| Specific strength = tensile strength/specific gravity | | | | | |

As shown in Table 1, SUS 304, SUS 403, SUS 420, SUS 630 and TAF 6400 are examples of materials usable for the member (rotor spacer 20) that covers the motor end ring 13b.

Because the rotor spacer 20 constrains radial deformation of the motor end ring 13b, the rotor spacer 20 itself slightly deforms radially, as shown by dotted lines 101 in FIG. 4. In view of the slight radial deformation of the rotor spacer 20, it is desirable that the outer diameter Ds of the rotor spacer 20 be made not more than the outer diameter Dc (Ds ≤ Dc) of the other members of the rotor 10, such as the motor rotor core 13a and the target 15 of the radial magnetic bearing (see FIG. 4), as shown in FIG. 5.

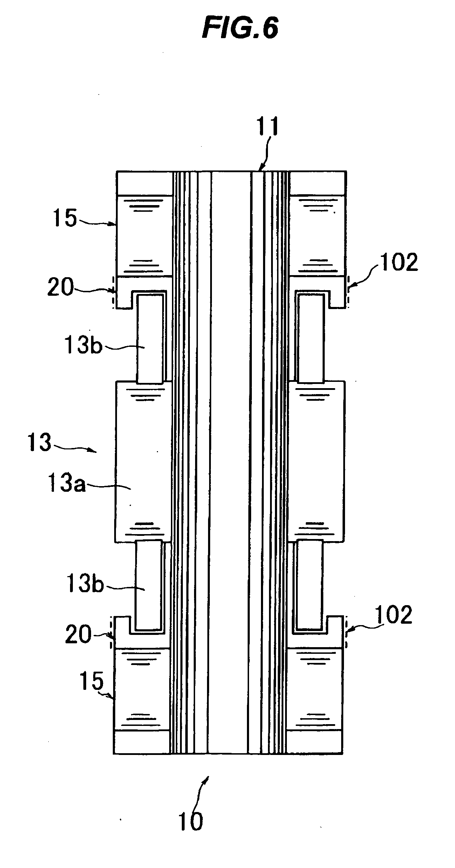

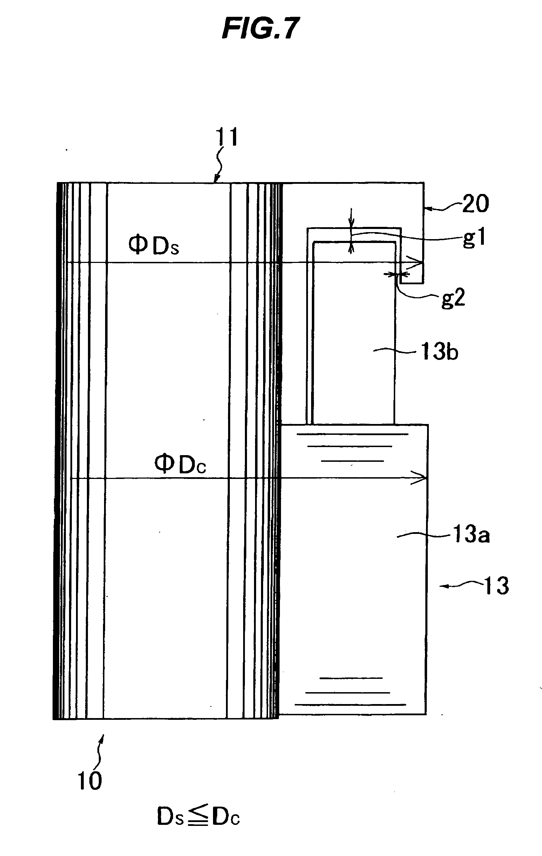

FIG. 6 is a cross-sectional diagram showing another embodiment of a rotor for use in a rotary apparatus according to the present invention, and FIG. 7 is an enlarged view of a portion of FIG. 6. As shown in the Figures, in this embodiment, the member that covers the motor end ring 13b, i.e., the rotor spacer 20, in its portion lying inside the inner periphery of the motor end ring 13b, is in axial contact with the end surface of the motor rotor core 13a. Further, a space having such an inner diameter that it covers the outer periphery of the motor end ring 13b is formed in the rotor spacer 20 at its end on the side opposite the motor rotor core 13a. The motor rotor core 13a, the rotor spacers 20, 20 and the targets 15, 15 of the radial magnetic bearing are axially positioned such that the rotor spacers 20, 20 are interposed between the motor rotor core 13a and the targets 15, 15 disposed on both sides of the motor core 13a. The rotor spacers 20, 20 each cover the end portion of the periphery of the motor end ring 13b on the side opposite the motor rotor core 13a. Further, a predetermined gap g1 is formed between the end surface of the motor end ring 13b on the side opposite the motor rotor core 13a and the inner end surface of the rotor spacer 20.

By thus providing the gap g1 between the end surface of the motor end ring 13b and the inner end surface of the rotor spacer 20 so that the motor end ring 13b is not in contact with the rotor spacer 20 in the axial direction, it becomes possible to prevent an increase in internal stress due to thermal expansion of the motor end ring 13b, thus preventing a change in the natural frequency of the rotor caused thereby. Further, by constructing the rotor spacer 20 such that it covers the end portion of the periphery of the motor end ring 13b on the side opposite the motor rotor core 13a, it becomes possible to prevent radial deformation of the motor end ring 13b due to centrifugal force, etc., thereby preventing breakage of the motor end ring 13b caused by the deformation.

Because the rotor spacer 20 constrains radial deformation of the motor end ring 13b, the rotor spacer 20 itself slightly deforms radially, as shown by dotted lines 102 in FIG. 6. In view of the slight radial deformation of the rotor spacer 20, it is desirable that the outer diameter Ds of the rotor spacer 20 be made not more than the outer diameter Dc (Ds ≤ Dc) of the other members of the rotor 10, such as the motor rotor core 13a and the target 15 of the radial magnetic bearing (see FIG. 6), as shown in FIG. 7.

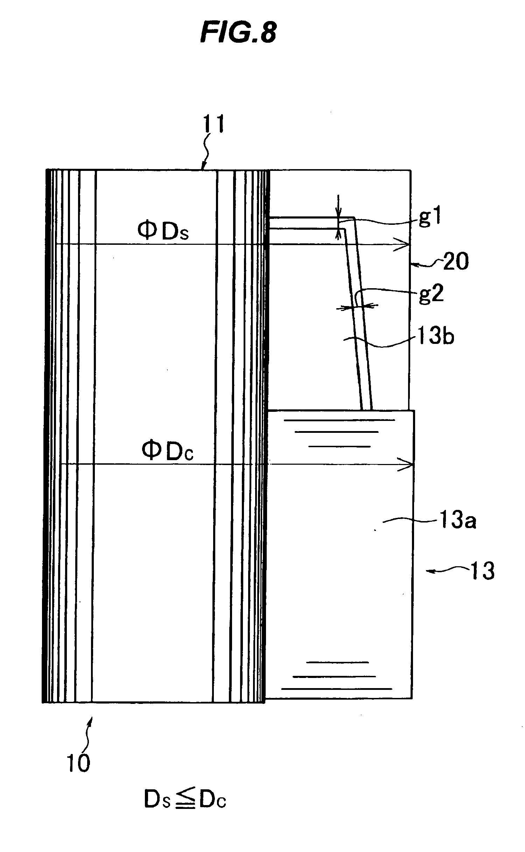

FIG. 8 is a cross-sectional diagram showing yet another embodiment of a rotor for use in a rotary apparatus according to the present invention. As shown in FIG. 8, the motor end ring 13b has a tapered cross-sectional shape whose radial thickness decreases with distance from the motor rotor core 13a. The rotor spacer 20 has, in its interior, a space having a tapered cross-sectional shape and covering the periphery of the tapered motor end ring 13b. Thus, the motor end ring 13b is disposed in the tapered space, and the rotor spacer 20 covers the periphery of the motor end ring 13b. Further, a predetermined gap g1 is formed between the end surface of the motor end ring 13b on the side opposite the motor rotor core 13a and the inner end surface of the rotor spacer 20.

The use of such a tapered cross-sectional shape can reduce deformation of the motor end ring 13b caused by centrifugal force during rotation of the motor end ring 13b. Further, because of an increase in the cross-sectional area of the base portion of the motor end ring 13b, the structural strength of the motor end ring 13b can be increased. The motor end ring 13b collects and connects secondary currents flowing in the conductors in the motor rotor core 13a. If the cross-sectional conduction area of the motor end ring 13b is the same as that shown in FIG. 2, the electric resistance is the same and thus the performance of the induction motor is the same. Insofar as the same cross-sectional conduction area can be maintained, any shape can be employed for the motor end ring 13b.

By providing the gap g1 between the end surface of the motor end ring 13b and the inner end surface of the rotor spacer 20 so that the motor end ring 13b is not in contact with the rotor spacer 20 in the axial direction, as described above, it becomes possible to prevent an increase in internal stress due to thermal expansion of the motor end ring 13b, thus preventing a change in the natural frequency of the rotor caused thereby. Further, by constructing the rotor spacer 20 such that it covers the radial periphery of the motor end ring 13b, it becomes possible to prevent radial deformation of the motor end ring 13b due to centrifugal force, etc., thereby preventing breakage of the motor end ring 13b caused by the deformation. The radial gap g2 between the motor end ring 13b and the inner surface of the rotor spacer 20, covering the motor end ring 13b, may be sufficient if it is formed to such an extent as to enable assembling of the rotor 10.

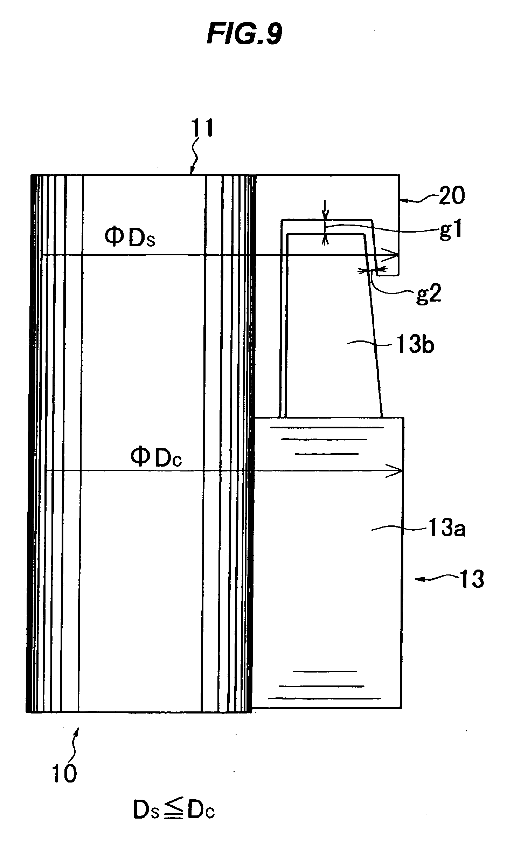

FIG. 9 is a cross-sectional diagram showing yet another embodiment of a rotor for use in a rotary apparatus according to the present invention. As shown in the FIG. 9, in this embodiment, the member that covers the motor end ring 13b, i.e., the rotor spacer 20, in its portion lying inside the inner periphery of the motor end ring 13b, is in axial contact with the end surface of the motor rotor core 13a. The motor end ring 13b has a tapered cross-sectional shape whose radial thickness decreases with distance from the motor rotor core 13a. A space having such an inner diameter that it covers the outer periphery of the motor end ring 13b is formed in the rotor spacer 20 at its end on the side opposite the motor rotor core 13a. The rotor spacer 20, interposed between the motor rotor core 13a and the target 15 of the radial magnetic bearing, covers the end portion of the periphery of the motor end ring 13b on the side opposite the motor rotor core 13a. The rotor thus constructed has the same technical effect as the rotor having the construction shown in FIG. 8.

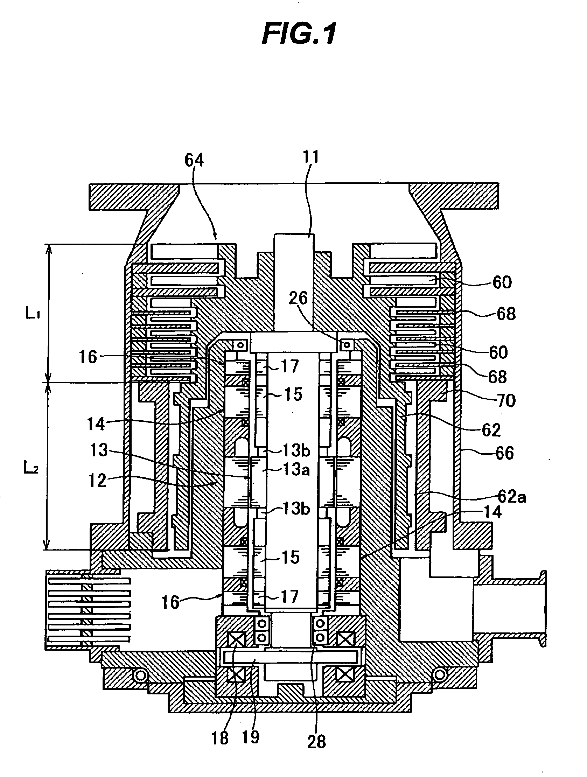

A rotary apparatus having the above-described rotor 10 can be exemplified by a turbomolecular pump as shown in FIG. 1, which drives a rotor at a rotating speed of tens of thousands of revolutions per minute. The rotor 10 can also be applied, e.g., in a molecular drag pump that exhausts a larger flow rate than a turbomolecular pump. While the use of a magnetic bearing has been described, it is also possible to use a mechanical bearing, a kinetic pressure bearing or the like.

While the present invention has been described with reference to the embodiments thereof, it will be understood by those skilled in the art that the present invention is not limited to the particular embodiments described above, but it is intended to cover modifications within the inventive concept. For example, though in the above-described embodiments the rotor spacer 20 also serves as a member that covers the periphery of the motor end ring 13b, it is also possible to provide a member, which covers the periphery of the motor end ring 13b, separately from the rotor spacer 20.

## Claims

1. A rotary apparatus comprising:
a rotor shaft (11); and
an induction motor for rotating the rotor shaft (11), the induction motor including
a motor rotor core (13a) fixed to the rotor shaft (11), conductors disposed in the motor rotor core (13a), and
a motor end ring (13b) for connecting the conductors, and capable of rotating the rotor shaft (11) at a high speed by the torque;
**characterized by**:
a target (15) of a radial magnetic bearing, the target (15) being disposed on the rotor shaft (11); and
a rotor spacer (20) arranged between the motor rotor core (13a) and the target (15) and having one end fixed to the rotor shaft (11);
wherein the rotor spacer (20) has a cylindrical shape with an outer diameter (ΦD_{S}) smaller than an outer diameter (ΦD_{C}) of the motor rotor core (13a) and is shaped so as to cover an outer periphery of the motor end ring (13b).

2. The rotary apparatus according to claim 1, wherein the rotor spacer (20) has the other end portion contacting an end surface of the motor rotor core (13a), and the other end portion lies outside the outer periphery of the motor end ring (13b).

3. The rotary apparatus according to claim 1, wherein an axial gap (g1) is formed between the one end portion of the rotor spacer (20) and the motor end ring (13b).

4. The rotary apparatus according to claim 1, wherein a radial gap (g2) is formed between the outer periphery of the motor end ring (13b) and an inner surface of the rotor spacer (20).

5. The rotary apparatus according to claim 1, wherein the motor end ring (13b) has a tapered cross-sectional shape whose radial thickness decreases with distance from the motor rotor core (13a).

## Patentansprüche

1. Drehvorrichtung, die Folgendes aufweist:
eine Rotorwelle (11); und
einen Induktionsmotor zum Drehen der Rotorwelle (11), wobei der Induktionsmotor Folgendes aufweist:
einen Motorrotorkern (13a), der an der Rotorwelle (11) befestigt ist, Leiter, die an dem Motorrotorkern (13a) angeordnet sind, und
einen Motorendring (13b) zum Verbinden der Leiter, und
der fähig ist, die Rotorwelle (11) mit einer hohen Drehzahl durch das Drehmoment zu drehen;
**gekennzeichnet durch**
ein Target (15) eines Radialmagnetlagers, wobei das Target (15) auf der Rotorwelle (11) angeordnet ist; und
einen Rotorabstandshalter (20), der zwischen dem Motorrotorkern (13a) und dem Target (15) angeordnet ist, und wobei ein Ende davon an der Rotorwelle (11) befestigt ist;
wobei der Rotorabstandshalter (20) eine zylindrische Form mit einem Außendurchmesser (ΦD_{S}) von weniger als einem Außendurchmesser (ΦD_{C}) des Motorrotorkerns (13a) hat und so geformt ist, dass er einen Außenumfang des Motorendrings (13b) bedeckt.

2. Drehvorrichtung nach Anspruch 1, wobei der andere Endteil des Rotorabstandshalters (20) eine Endfläche des Motorrotorkerns (13a) berührt, und wobei der andere Endteil außerhalb des Außenumfangs des Motorendrings (13b) liegt.

3. Drehvorrichtung nach Anspruch 1, wobei ein Axialspalt (g1) zwischen dem einen Endteil des Rotorabstandshalters (20) und dem Motorendring (13b) geformt ist.

4. Drehvorrichtung nach Anspruch 1, wobei ein Radialspalt (g2) zwischen dem Außenumfang des Motorendrings (13b) und einer Innenfläche des Rotorabstandshalters (20) geformt ist.

5. Drehvorrichtung nach Anspruch 1, wobei der Motorendring (13b) eine verjüngte Querschnittsform hat, deren radiale Dicke mit einem Abstand vom Motorrotorkern (13a) abnimmt.

## Revendications

1. Appareil rotatif comprenant :
un arbre de rotor (11) ; et
un moteur à induction pour faire tourner l'arbre de rotor (11), le moteur à induction comprenant
un noyau de rotor de moteur (13a) fixé à l'arbre de rotor (11),
des conducteurs disposés dans le noyau de rotor de moteur (13a), et
une bague d'extrémité de moteur (13b) pour connecter les conducteurs, et
capable de faire tourner l'arbre de rotor (11) à une vitesse élevée grâce au couple ;
**caractérisé par** :
une cible (15) d'un palier magnétique radial, la cible (15) étant disposée sur l'arbre de rotor (11) ; et
une entretoise de rotor (20) agencée entre le noyau de rotor de moteur (13a) et la cible (15) et ayant une extrémité fixée à l'arbre de rotor (11) ;
dans lequel l'entretoise de rotor (20) a une forme cylindrique ayant un diamètre extérieur (ΦD_{S}) plus petit qu'un diamètre extérieur (ΦD_{C}) du noyau de rotor de moteur (13a) et a une forme telle qu'elle recouvre une périphérie extérieure de la bague d'extrémité de moteur (13b).

2. Appareil rotatif selon la revendication 1, dans lequel l'entretoise de rotor (20) a son autre portion d'extrémité qui contacte une surface d'extrémité du noyau de rotor de moteur (13a), et l'autre portion d'extrémité repose en dehors de la périphérie extérieure de la bague d'extrémité de moteur (13b).

3. Appareil rotatif selon la revendication 1, dans lequel un intervalle axial (g1) est formé entre ladite portion d'extrémité de l'entretoise de rotor (20) et la bague d'extrémité de moteur (13b).

4. Appareil rotatif selon la revendication 1, dans lequel un intervalle radial (g2) est formé entre la périphérie extérieure de la bague d'extrémité de moteur (13b) et une surface intérieure de l'entretoise de rotor (20).

5. Appareil rotatif selon la revendication 1, dans lequel la bague d'extrémité de moteur (13b) a une section de forme conique dont l'épaisseur radiale diminue avec la distance par rapport au noyau de rotor de moteur (13a).
